# EUROPEAN PATENT APPLICATION

(11) **EP 4 450 157 A1**
(43) Date of publication of application: **23.10.2024**
(21) Application number: 23752467.3
(22) Date of filing: 13.02.2023
(51) Int. Cl.: B01J 23/34, B01J 23/10, B01D 53/94, B01D 53/56

(54) **GRAIN BOUNDARY AND SURFACE DOPED RARE EARTH MANGANESE-ZIRCONIUM COMPOSITE COMPOUND AS WELL AS PREPARATION METHOD THEREFOR AND USE THEREOF**

(30) Priority: 14.02.2022 CN 202210135508
(71) Applicant: Grirem Hi-Tech Co., Ltd., Langfang, Hebei 065201 (CN); Grirem Advanced Materials Co., Ltd., Beijing 100088 (CN); Rare Earth Functional Materials (Xiong'An) Innovation Center Co., Ltd., Baoding, Hebei 071700 (CN)
(72) Inventor: ZHANG, Yongqi, Beijing 100088 (CN); HUANG, Xiaowei, Beijing 100088 (CN); ZHAO, Weixin, Beijing 100088 (CN); PENG, Xinlin, Beijing 100088 (CN); ZHAO, Zheng, Beijing 100088 (CN); HOU, Yongke, Beijing 100088 (CN); ZHAI, Zhizhe, Beijing 100088 (CN); ZHONG, Qiang, Beijing 100088 (CN)
(74) Representative: Huang, Liwei
(86) International application number: PCT/CN2023/075767
(87) International publication number: WO 2023/151689

(57) **Abstract**

The invention relates to a rare earth manganese-zirconium composite compound which is doped at surface and at grain boundary as well as a preparation method and use thereof. A rare earth manganese oxide with a special structure is formed at grain boundary and surface of a rare earth zirconium-based oxide by a grain boundary doping method so as to increase oxygen defects at the grain boundary and the surface, thereby increasing the amount of active oxygen, improving the catalytic activity of the rare earth manganese-zirconium composite compound, inhibiting high-temperature sintering of the rare earth manganese-zirconium composite compound, and improving the NO catalytic oxidation capability. When the rare earth manganese-zirconium composite compound is applied to a catalyst, the consumption of noble metal can be greatly reduced.

## Description

### Cross-reference

This application is based on Chinese patent application No. 202210135508.7, filed on February 14, 2022, and claims the priority of the Chinese patent application, the entire contents of which are incorporated herein by reference.

### Technical Field

The invention relates to the technical field of rare earth manganese-zirconium composite compounds, in particular to rare earth manganese-zirconium composite compound which is doped at surface and at grain boundary as well as a preparation method and use thereof.

### Background Art

Lean-burn engines, such as diesel engines and lean-burn gasoline engines, are widely used because of their high fuel economy and low greenhouse gas emissions. However, a large amount of nitrogen oxides (NOₓ) in exhaust can not only cause serious environmental problems such as photochemical smog and acid rain, but also cause serious harm to human health. Therefore, how to effectively remove NOₓ from lean-burn engine exhaust is a hot issue at home and abroad. DOC is a diesel oxidation catalyst used to reduce nitrogen oxides (NOₓ), hydrocarbons (HC) and carbon monoxide (CO) gaseous pollutants from diesel engines. At present, the oxidation of HC, CO and part of NO in DOC is usually achieved by loading noble metals on alumina, but the oxidation rate of NO → NO₂ is usually less than 40%. In order to obtain higher NO oxidation performance, more noble metals need to be coated, resulting in a significant increase in catalyst cost. Metal oxide catalysts, such as Cu-Cr (Co), MnOₓ -CeO₂ and CuMnO₄, have attracted much attention in recent years because of their low cost and good catalytic activity. However, metal oxides generally have poor temperature resistance and are easily deactivated at high temperature. Therefore, it is urgent to develop new catalytic materials with high NO catalytic activity and high temperature stability.

### Summary of the Invention

Based on the above situation of the prior art, the invention aims to provide a rare earth manganese-zirconium composite compound which is doped at surface and at grain boundary and a preparation method and use thereof. By doping, the oxidation capability of metal ions at the surface and the grain boundary is greatly improved, deactivation of active components during high temperature sintering is inhibited, and catalytic oxidation capability of NO is improved.

In order to achieve the above object, according to one aspect of the invention, there is provided a rare earth manganese-zirconium composite compound which is doped at surface and at grain boundary, wherein the rare earth manganese-zirconium composite compound has a chemical formula of REₐMn_{b}Zr_{c}L_{d}MₑO(_{2-δ})D_{β}, RE is a rare earth element; M and L are cation doping elements, and D is an anion doping element;
wherein, 0.1≤a≤0.5, 0.05≤b≤0.4, 0.2≤c≤0.8, 0≤d≤0.2, 0≤e≤0.2, 0≤δ≤0.1, 0≤β≤0.1, a+b+c+d+e=1.

Further, the grain boundary and the surface of the rare earth manganese-zirconium composite compound contain one or more than one selected from doping elements M, L and D.

Further, the doping elements M, L and D are in the form of one or more of oxides, nitrogen-containing compounds, fluorides, phosphates and sulfates at the grain boundary and the surface of the rare earth manganese-zirconium composite oxide.

Further, the RE comprises one or more of La, Ce, Pr, Nd, Sm, Eu, Gd, Ho, Er, Tm, Yb, Lu, Y, and Sc;

Preferably, RE is one or a combination of more than one selected from La, Ce, Pr, Nd, Sm, Eu, Gd, and Y.

Further, the cation doping element M is a transition metal, preferably one or a combination of more than one selected from Fe, Co, Ni, Cu, Zn, V, Ti, Cr, Mo, W, Hf, and Nb; the cation doping element L is one or a combination of more than one selected from an alkaline earth metal and Ga, Al, Si, and Sn, and the alkaline earth metal is preferably one or a combination of more than one selected from Ba, Sr, Mg, and Ca; and the doping element D comprises one or a combination of more than one selected from anions N, P, F, and S.

Further, the total amount of +3 and +4 valence states of Mn on the surface and grain boundary of the rare earth manganese-zirconium composite compound accounts for more than 80% of all valence states of Mn; preferably, greater than 90%.

Further, the grain boundary and surface doped rare earth manganese-zirconium composite compound comprises a core-shell structure, wherein the core comprises rare earth and zirconium elements, and the shell comprises rare earth and manganese elements. According to the difference of element surface energy and oxygen vacancy formation energy calculated in theory, the variety and content of elements in the shell or/and the core are designed, and thermal stability and oxygen storage and release performance of the rare earth manganese-zirconium composite oxide are comprehensively improved.

Further, the rare earth manganese-zirconium composite compound which is doped at surface and at grain boundary comprises rare earth zirconium-based oxide with an element gradient distribution structure. According to the difference of element surface energy and oxygen vacancy formation energy calculated in theory, the variety and content of elements in the gradient structure are designed, so that the content of specific elements in the radial direction of crystal grains is gradually increased or decreased from inside to outside, and thermal stability and oxygen storage and release performance of the rare earth manganese-zirconium composite oxide are comprehensively improved.

According to a second aspect of the invention, there is provided a preparation method of the rare earth manganese-zirconium composite compound which is doped at surface and at grain boundary according to the first aspect of the invention, comprising the following steps:
S1, mixing a mixed salt aqueous solution of Zr and RE or a mixed salt aqueous solution of Zr, RE, L, and D with an alkaline solution in a required stoichiometric ratio, carrying out precipitation reaction, and filtering, washing, drying and roasting to obtain rare earth zirconium-based oxide containing RE and L;
S2, mixing a mixed salt aqueous solution of Mn and RE or a mixed salt aqueous solution of Mn, RE, M, and D in a required stoichiometric amount with the rare earth zirconium-based oxide obtained in step S1 to obtain a composite compound wet material;
S3, performing one or two heat treatments on the composite compound wet material obtained in step S2; and
S4, performing one or two calcinations on the material obtained in step S3 to obtain the rare earth manganese-zirconium composite compound which is doped at surface and at grain boundary.

Further, the doping element D is added in one or both of steps S1 and S2; the doping element D is added in the form of one or a combination of more than one selected from nitrate, fluoride, phosphate, and sulfate, preferably one or a combination of more than one selected from nitrate and sulfate.

Further, the manganese source in the mixed salt aqueous solution in step S1 and step S2 comprises one or a combination of more than one selected from chloride, nitrate, sulfate, and acetate, preferably manganese nitrate; the zirconium source comprises one or a combination of more than one selected from oxychloride, nitrate, sulfate, acetate, and citrate, preferably zirconyl nitrate; the salt aqueous solution of M, L, and RE salt comprises one or a combination of more than one selected from liquid salt of chloride, nitrate, sulfate, acetate, citrate, amino acid salt, and organosilicon compound, preferably nitrate.

Further, the alkaline solution in step S1 comprises at least one selected from magnesium bicarbonate, urea and hydroxide, carbonate and bicarbonate of at least one element selected from ammonium, sodium and potassium, preferably at least one selected from sodium hydroxide, urea, ammonia water, and ammonium bicarbonate.

Further, in the precipitation process of step S1, the pH value is controlled at 4.5-14, preferably 5-11; the pH value at the end of precipitation is controlled at 8-13, preferably 9-11; and the temperature during the precipitation is 0-120°C, preferably 20-80°C.

Further, the roasting of the rare earth zirconium-based oxide in step S1 is performed at a temperature of 500-1000°C for 1-20 h; preferably, the roasting is performed at a temperature of 600-900 °C for 2-10 h.

Further, the heat treatment in step S3 is performed at a temperature of 100-500°C for 2-30 h; preferably, the heat treatment is performed at a temperature of 150-300°C for 6-12 h.

Further, the calcination in step S4 is performed at a temperature of 400-1000 °C for 1-20 h; preferably, the calcination is performed at a temperature of 500-900°C for 3-10 h.

Further, the rare earth manganese-zirconium composite compound after post-treatment has a particle size D50 of less than 15 um, preferably, a particle size D50 of less than 10 um.

Further, rare earth manganese oxide with perovskite, spinel or mullite structure is formed on the surface and the grain boundary of the rare earth zirconium-based oxide after calcination.

According to a third aspect of the invention, there is provided use of the rare earth manganese-zirconium composite compound which is doped at surface and at grain boundary according to the first aspect of the invention in the fields of motor vehicle exhaust purification, industrial waste gas treatment, and catalytic combustion.

In summary, the invention provides a rare earth manganese-zirconium composite compound which is doped at surface and at grain boundary and a preparation method and use thereof. Rare earth, manganese, transition metal and other elements are added to the surface, grain boundary and grain interior of rare earth zirconium-based oxide by a doping method to obtain rare earth manganese-zirconium composite compound containing perovskite, spinel, mullite and other structures. On one hand, a compound formed by elements such as rare earth, manganese, transition metal and the like inhibits the phase structure transformation of the compound at high temperature through the rare earth zirconium-based oxide, thereby improving high-temperature catalytic activity of the compound; and on the other hand, the free active oxygen of the rare earth zirconium-based oxide on the surface and the grain boundary is easier to diffuse to active sites, and the catalytic activity of the rare earth manganese-zirconium composite compound is further improved. According to the technical scheme provided by the invention, oxidation capability of metal ions on the surface and the grain boundary is greatly improved by doping the grain boundary and the surface, high-temperature sintering inactivation of active components is inhibited, and catalytic oxidation capability of NO is improved.

### Brief Description of the Drawings

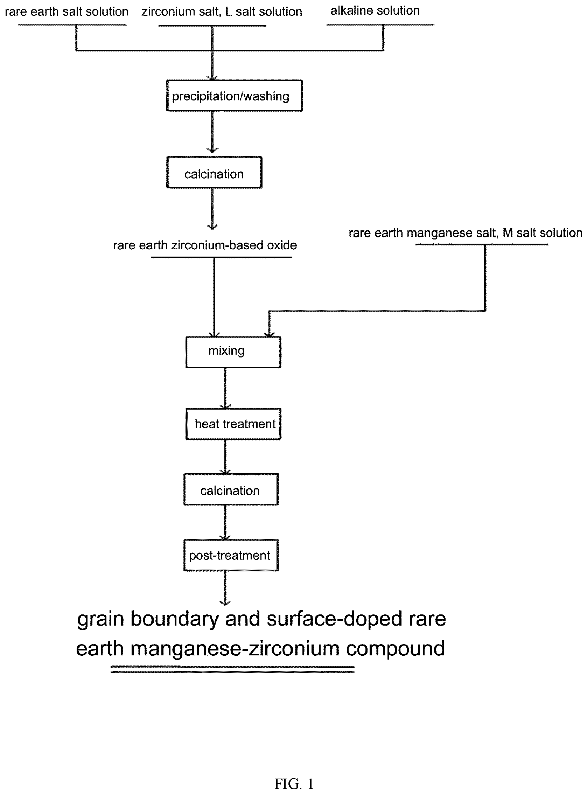

FIG. 1 is a flow chart of the preparation method of the surface and grain boundary-doped rare earth manganese-zirconium composite compound according to Examples of the invention.

### Detailed Description of the Invention

In order to make the purpose, technical solution and advantages of the invention more clearly understood, the invention will be further described in detail with reference to the following detailed description of the preferred embodiments and the accompanying drawings. It should be understood that these descriptions are exemplary only and are not intended to limit the scope of the invention. In addition, in the following description, descriptions of well-known structures and techniques are omitted to avoid unnecessarily obscuring the concepts of the invention.

According to a first aspect of the invention, there is provided a rare earth manganese-zirconium composite compound which is doped at surface and at grain boundary, wherein the rare earth manganese-zirconium composite compound has a chemical formula of REₐMn_{b}Zr_{c}L_{d}MₑO(_{2-δ})D_{β}, RE is a rare earth element; M and L are cation doping elements, and D is anion doping element, wherein the value of each element can be: 0.1≤a≤0.5, 0.05≤b≤0.4, 0.2≤c≤0.8, 0≤d≤0.2, 0≤e≤0.2, 0≤δ≤0.1, 0≤β≤0.1, a+b+c+d+e=1.

The element RE can be one or a combination of more than one selected from La, Ce, Pr, Nd, Sm, Eu, Gd, Tb, Dy, Ho, Er, Tm, Yb, Lu, Y, and Sc; preferably, the element RE is one or a combination of more than one selected from La, Ce, Pr, Nd, Sm, Eu, Gd, and Y; the doping element M is a transition metal, preferably one or a combination of more than one selected from Fe, Co, Ni, Cu, Zn, V, Ti, Cr, Mo, W, Hf, and Nb, and the molar proportion of M element at the grain boundary and the surface is 10%-70%; the doping element L can be one or a combination of more than one selected from alkaline earth metal and Ga, Al, Si, and Sn, the alkaline earth metal is preferably one or a combination of more than one selected from Ba, Sr, Mg, and Ca, the molar proportion of L element at the grain boundary and the surface is 10%-70%; the doping element D can be one or a combination of more than one selected from anions N, P, F, and S, and the mole proportion of element D at the grain boundary and the surface is 10%-70%. The morphology and proportion of L, M and D at the grain boundary and the surface are adjusted and controlled by controlling precipitation parameters, and heat treatment temperature, roasting temperature, time of the product, atmosphere and the like.

The grain boundary and the surface of the rare earth manganese-zirconium composite compound contain one or more than two of doping elements M, L and D.

The doping elements M, L and D are in the form of one or more of oxides, nitrogen-containing compounds, fluorides, phosphates and sulfates at the grain boundary and the surface of the rare earth manganese-zirconium composite oxide.

The total amount of +3 and +4 valence states of element Mn on the surface and grain boundary of the rare earth manganese-zirconium composite compound accounts for more than 80% of all valence states of Mn; preferably, greater than 90%.

The rare earth manganese-zirconium composite oxide provided by embodiments of the invention comprises a core-shell structure, wherein the core comprises rare earth and zirconium elements, and the shell comprises rare earth and manganese elements. Additional features and advantages of the core-shell structure of the rare earth manganese-zirconium composite oxide can be found in the Chinese patent application No. ZL201910833257.8, entitled "Rare earth manganese/cerium-zirconium composite compound with core-shell structure, preparation method and catalyst", filed on September 4, 2019, and the entire content thereof. According to the difference of element surface energy and oxygen vacancy formation energy calculated in theory, the variety and the content of shell or/and core element are designed, and thermal stability and oxygen storage and release performance of the rare earth manganese zirconium composite oxide are comprehensively improved.

The rare earth manganese-zirconium composite oxide provided by embodiments of the invention comprises a rare earth zirconium-based oxide with an element gradient distribution structure. Additional features and advantages of the element gradient distribution structure of rare earth zirconium-based oxide can be found in the Chinese patent application No. CN202010982979.2, entitled "Cerium-zirconium-based composite oxide with element gradient distribution and preparation method thereof", filed on September 17, 2020, and the entire content thereof. According to the difference of element surface energy and oxygen vacancy formation energy calculated in theory, the variety and content of elements in the gradient structure are designed and controlled, so that the content of specific elements in the radial direction of crystal grains is gradually increased or decreased from inside to outside, and the thermal stability and oxygen storage and release performance of the rare earth manganese zirconium composite oxide are comprehensively improved.

According to a second aspect of the invention, there is provided a preparation method of the surface and grain boundary-doped rare earth manganese-zirconium composite compound according to the first aspect of the invention, a flow chart of which is shown in FIG. 1, comprising the following steps:
S1, mixing a mixed salt aqueous solution of Zr and RE or a mixed salt aqueous solution of Zr, RE and L in a required stoichiometric ratio with an alkaline solution, carrying out precipitation reaction, and filtering, washing, drying and roasting to obtain rare earth zirconium-based oxide containing RE and L, wherein pH value in the precipitation process is controlled at 4.5-14, preferably 5-11; pH value at the end of precipitation is controlled at 8-13, preferably 9-11, and temperature in the precipitation process is 0-120°C, preferably 20-80°C. The roasting condition is maintained in the range of 500-1000 °C for 1-20 h, and is preferably maintained in the range of 600-900 °C for 2-10 h; the doping element D can be added in step S1, for example, the doping element D is added by one or a combination of more than one selected from nitrate, fluoride, phosphate and sulfate, preferably, the doping element D is added by one or a combination of more than one selected from nitrate and sulfate. The alkaline solution may be at least one selected from magnesium bicarbonate, urea, and hydroxide, carbonate and bicarbonate of at least one selected from ammonium, sodium and potassium, preferably at least one selected from sodium hydroxide, urea, ammonia water, and ammonium bicarbonate.
S2, mixing a mixed salt aqueous solution of Mn and RE or a mixed salt aqueous solution of Mn, RE and M with a required stoichiometric amount with the rare earth zirconium-based oxide obtained in step S1 to obtain a composite compound wet material; the doping element D may also be added in step S2, for example, the doping element D is added by one or a combination of more than one selected from nitrate, fluoride, phosphate, and sulfate, preferably, by one or a combination of more than one selected from nitrate and sulfate.
   The manganese source in the mixed salt solution in steps S1 and S2 comprises one or a combination of more than one selected from chloride, nitrate, sulfate, and acetate, preferably manganese nitrate; the zirconium source comprises one or a combination of more than one selected from oxychloride, nitrate, sulfate, acetate, and citrate, preferably zirconyl nitrate; M, L and RE salt solution comprises one or a combination of more than one selected from liquid salt of chloride, nitrate, sulfate, acetate, citrate, amino acid salt, and organosilicon compound, preferably nitrate.
S3, performing one or two heat treatments on the composite compound wet material obtained in step S2, wherein the heat treatment is performed, for example, at a temperature of 100-500 °C for 2-30 h; preferably, the heat treatment is performed at a temperature of 150-300 °C for 6-12 h. In order to meet the special requirements of rare earth manganese-zirconium composite compound for different applications, the type of doping elements and microstructure at the grain boundary need to be adjusted or changed, so that different heat treatment systems need to be adopted, such as step-by-step heat treatment, so that doping elements can enter the grain boundary more uniformly and stably, and treatments such as water washing, water quenching and the like can also be carried out between two heat treatments.
S4, performing one or two calcinations on the material obtained in step S3 to obtain the rare earth manganese-zirconium composite compound which is doped at surface and at grain boundary, wherein the calcination is performed at a temperature of 400-1000 °C for 1-20 h; preferably, the calcination is performed at a temperature of 500°C-900°C for 3-10 h. The obtained rare earth manganese-zirconium composite compound is calcined for 1-2 times to obtain a rare earth manganese-zirconium composite compound powder material with a specific structure, and after the primary calcination, the powder material can be crushed and subjected to surface treatment to avoid secondary sintering and agglomeration.

The rare earth manganese-zirconium composite compound after post-treatment has particle size D50 of less than 15 um, preferably less than 10 um. In the preparation method, rare earth, manganese, transition metal and other elements are added to the surface and grain boundary of the rare earth zirconium-based oxide by doping method to obtain the rare earth manganese-zirconium composite compound with perovskite, spinel, mullite and other structures, so that the oxygen defect concentration on the surface and the grain boundary is increased, and the amount of free active oxygen is increased. Element gradient distribution structure or the core-shell structure can improve perovskite, spinel, mullite and other structures at the surface grain boundary, improve high-temperature catalytic activity, inhibit high-temperature sintering, and reduce the consumption of noble metals in a catalyst.

According to a third aspect of the invention, there is provided use of the grain boundary and surface-doped rare earth manganese-zirconium compound according to the first aspect of the invention in the fields of motor vehicle exhaust purification, industrial waste gas treatment, catalytic combustion, and the like. The rare earth manganese-zirconium composite compound provided by embodiments of the invention greatly increases the amount of free active oxygen on the surface and grain boundary through doping, and is beneficial to catalytic oxidation of NO molecule, has good effects on inhibiting high-temperature sintering deactivation and noble metal reduction, and can obviously improve the catalytic oxidation capability of NO when applied in the fields of motor vehicle exhaust purification, industrial waste gas treatment and catalytic combustion.

The invention will be further illustrated by specific examples below, and the catalytic performance of the prepared rare earth manganese-zirconium composite compound for NO oxidation were determined. The catalytic performance test conditions of each example are the same, and the specific test steps are as follows: 50 mg the prepared rare earth manganese-zirconium composite compound is placed in a microreactor for catalyst activity evaluation test, and the contents of NO, NO₂ and NOₓ at the corresponding temperature are recorded by an infrared gas analyzer (MKS), so that the conversion rate of NO is calculated. The specific test conditions are as follows: the volume composition of reaction gas: oxygen 10%, water 10%, carbon monoxide 300 ppm, nitric oxide 300ppm, C₃H₆ 300 ppm; the balance gas is nitrogen: the total flow is 150 mL/min, and the airspeed is 40000 h⁻¹. Reaction temperature setting: the temperature is raised from room temperature to 400°C at a rate of 20°C/min, and the reaction time is 20 min.

### Comparative Example 1

A mixed feed liquid with a total cation concentration of 1.5 M was prepared according to the molar ratio of Ce/Mn/Nd/Zr in rare earth zirconium-manganese composite oxide Ce_{0.05}Nd_{0.05}Mn_{0.05}Zr_{0.8}O₂, 1:1:1:16; the mixed feed liquid was added into 3.0 M sodium hydroxide solution at a uniform rate while stirring, the pH value in the precipitation process was 10-14, the pH value at the end was 10, and the temperature was controlled at 50°C ; and the precipitate was filtered, washed, dried, and roasted at 650°C for 8 h to obtain bulk-doped rare earth manganese-zirconium composite compound Ce_{0.05}Nd_{0.05}Mn_{0.05}Zr_{0.8}O₂.

The rare earth manganese-zirconium composite compound prepared by the preparation method of Comparative Example 1 has the highest conversion rate of 42% for catalytic oxidation of NO, and the conversion temperature corresponding to the highest conversion rate is 357°C. After high-temperature aging at 850°C for 15 h, the highest conversion rate of NO is 30%, and the corresponding conversion temperature is 380 °C.

### Comparative Example 2

A mixed feed liquid with a concentration of 1.0 M was prepared according to the molar ratio of Ce/Al/Mn/Zr in rare earth zirconium-manganese composite oxide Ce_{0.1}Al_{0.1}Mn_{0.2}Zr_{0.6}O₂, 1:1:2:6; the mixed feed liquid and 2.8 M sodium hydroxide solution were added into a reactor at a uniform rate while stirring, the pH value in the precipitation process was controlled at 9 ± 0.2, the pH value at the end was 9.2, and the temperature was controlled at 40°C ; and the precipitate was filtered, washed, dried, and roasted at 600°C for 10 h to obtain bulk-doped rare earth manganese-zirconium composite compound Ce_{0.1}Al_{0.1}Mn_{0.2}Zr_{0.6}O₂.

The rare earth manganese-zirconium composite compound prepared by the preparation method of Comparative Example 2 has the highest conversion rate of 45% for catalytic oxidation of NO, and the conversion temperature corresponding to the highest conversion rate is 352°C.

### Comparative Example 3

A mixed feed liquid with a concentration of 1.0 M was prepared according to the molar ratio of Ce/La/Mn/Fe/Zr in rare earth zirconium-manganese composite oxide Ce_{0.2}La_{0.1}Mn_{0.1}Fe_{0.1}Zr_{0.5}O₂, 2:1:1:1:5, wherein the cerium salt and lanthanum salt are acetates; 2.6 M ammonia water solution was added into the mixed feed liquid at a uniform rate while stirring, the pH value in the precipitation process was controlled at 5-9, the pH value at the end was 8.9, and the temperature was controlled at 60 °C; and the precipitate was filtered, washed, dried, and roasted at 900°C for 9 h to obtain bulk-doped rare earth manganese-zirconium composite compound Ce_{0.2}La0.₁Mn_{0.1}Fe_{0.1}Zr_{0.5}O₂.

The rare earth manganese-zirconium composite compound prepared by the preparation method of Comparative Example 3 has the highest conversion rate of 49% for catalytic oxidation of NO, and the conversion temperature corresponding to the highest conversion rate is 350°C.

### Example 1

A mixed feed liquid with a concentration of 1.5 M was prepared according to the molar ratio of Ce/Nd/Zr in rare earth zirconium-manganese composite oxide Ce_{0.05}Nd_{0.05}Mn_{0.05}Zr_{0.8}O₂ , 0.5: 1:16; the mixed feed liquid was added to 3.0 M NaOH solution at a uniform rate while stirring, the pH value in the precipitation process was 10-14, the pH value at the end was 10, and the temperature was controlled at 50°C ; the precipitate was filtered, washed and dried, and the dried product was roasted at 800°C for 7 h to obtain rare earth zirconium-based oxide. The rare earth zirconium-based oxide was mixed with 4.8 M Ce-containing Mn(NO₃)₂ solution, and the mixture was heat-treated at 150°C for 5 h, and then roasted at 650°C for 8 h to obtain rare earth manganese-zirconium composite compound which is doped at surface and at grain boundary Ce_{0.05}Nd_{0.05}Mn_{0.05}Zr_{0.8}O₂.

The rare earth manganese-zirconium composite compound obtained by adopting the preparation method in this example of the invention has the highest conversion rate of 52% for catalytic oxidation of NO, and the conversion temperature corresponding to the highest conversion rate is 300°C.

### Example 2

A mixed feed liquid with a concentration of 1.0 M was prepared according to the molar ratio of Ce/Al/Zr in rare earth zirconium-manganese composite oxide Ce_{0.1}Al_{0.1}Mn_{0.2}Zr_{0.6}O₂, 0.5: 1:6; the mixed feed liquid and 2.8 M NaOH solution were added into a reactor at a uniform rate while stirring, the pH value in the precipitation process was controlled at 9 ± 0.2, the pH value at the end was 9.2, and the temperature was controlled at 40°C; the precipitate was filtered, washed and dried, and the dried product was roasted at 700°C for 5 h to obtain rare earth zirconium-based oxide. The rare earth zirconium-based oxide was mixed with 4.5 M Mn(NO₃)₂ solution containing Ce, and the mixture was heat treated at 170°C for 10 h, and roasted at 600°C for 10 h to obtain rare earth manganese-zirconium composite compound which is doped at surface and at grain boundary Ce_{0.1}Al_{0.1}Mn_{0.2}Zr_{0.6}O₂.

The rare earth manganese-zirconium composite compound obtained by adopting the preparation method in this example of the invention has the highest conversion rate of 55% for catalytic oxidation of NO, and the conversion temperature corresponding to the highest conversion rate is 308°C.

### Example 3

A mixed feed liquid with a concentration of 1.2 M was prepared according to the molar ratio of Ce/Y/Zr in rare earth zirconium-manganese composite oxide Ce_{0.05}Y_{0.05}Mn_{0.2}Zr_{0.7}O₂, 0.5: 0.2: 7; 2.6 M urea solution was added into the mixed feed liquid at a uniform rate while stirring, the pH value in the precipitation process was 3-9, the pH value at the end was 9, and the temperature was controlled at 110 °C ; the precipitate was filtered, washed and dried, and the dried product was roasted at 600 °C for 4 h to obtain rare earth zirconium-based oxide. The rare earth zirconium-based oxide was mixed with 4.3 M MnCl₂ solution containing Y, and the mixture was heat treated at 190°C for 6 h, and roasted at 800°C for 7 h to obtain rare earth manganese-zirconium composite compound which is doped at surface and at grain boundary Ce_{0.05}Y_{0.05}Mn_{0.2}Zr_{0.7}O₂.

The rare earth manganese-zirconium composite compound obtained by the preparation method in this example of the invention has the highest conversion rate of 57% for catalytic oxidation of NO, and the conversion temperature corresponding to the highest conversion rate is 306°C.

### Example 4

A mixed feed liquid with the concentration of 1.5 M was prepared according to the molar ratio of Ce/Nd/Si/Zr in rare earth zirconium-manganese composite oxide Ce_{0.2}Nd_{0.05}Si_{0.05}Mn_{0.2}Zr_{0.5}O₂, 1: 0.5: 0.5: 5; the mixed feed liquid was added into 2.9 M NaOH solution at a uniform rate while stirring, the pH value in the precipitation process was 8-14, the pH value at the end was 8, and the temperature was controlled at 60°C; the precipitate was filtered, washed and dried, and the dried product was roasted at 800°C for 7 h to obtain rare earth zirconium-based oxide. The rare earth zirconium-based oxide was mixed with 4.1 M Mn(CH₃COO)₂ solution containing Ce, and the mixture was heat treated at 200°C for 5 h, and then roasted at 820°C for 9 h to obtain rare earth manganese-zirconium composite compound which is doped at surface and at grain boundary Ce_{0.2}Nd_{0.05}Si_{0.05}Mn_{0.2}Zr_{0.5}O₂.

The rare earth manganese-zirconium composite compound obtained by adopting the preparation method in this example of the invention has the highest conversion rate of 63% for catalytic oxidation of NO, and the conversion temperature corresponding to the highest conversion rate is 296°C.

### Example 5

A mixed feed liquid with a concentration of 1.6 M was prepared according to the molar ratio of Ce/Nd/Y/Al/Zr in rare earth zirconium-manganese composite oxide Ce_{0.05}Nd_{0.05}Y_{0.05}Al_{0.1}Mn_{0.2}Zr_{0.7}O₂, 0.2: 0.3: 0.5: 1:7; the mixed feed liquid and 3.6 M ammonia solution were added into a reactor at a uniform rate while stirring, the pH value in the precipitation process was controlled at 10±0.2, the pH value at the end was 10.2, and the temperature was controlled at 50 °C ; the precipitate was filtered, washed and dried, and the dried product was roasted at 700 °C for 5 h to obtain rare earth zirconium-based oxide. The rare earth zirconium-based oxide was mixed with 4.3 M Mn(NO₃)₂ solution containing Ce and Nd, and the mixture was heat-treated at 200 °C for 5 h, and roasted at 600 °C for 5 h to obtain rare earth manganese-zirconium composite compound which is doped at surface and at grain boundary Ce_{0.05}Nd_{0.05}Y_{0.05}Al_{0.1}Mn_{0.2}Zr_{0.7}O₂.

The rare earth manganese-zirconium composite compound obtained by the preparation method in this example of the invention has the highest conversion rate of 66% for catalytic oxidation of NO, and the conversion temperature corresponding to the highest conversion rate is 289°C.

### Example 6

A mixed feed liquid with a concentration of 1.5 M was prepared according to the molar ratio of Ce/La/Nd/Y/Zr in rare earth zirconium-manganese composite oxide, 5:2:3:5:58; the mixed feed liquid was added to 2.1 M NaOH solution at a uniform rate while stirring, the pH value in the precipitation process was 8-11, the pH value at the end was 8, and the temperature was controlled at 40 °C; the precipitate was filtered, washed and dried, and the dried product was roasted at 700°Cfor 6 h to obtain rare earth zirconium-based oxide. The rare earth zirconium-based oxide was mixed with 4.6 M Mn(NO₃)₂ solution containing Ce, La, Nd, and the mixture was heat treated at 200 °C for 13 h, and roasted at 750 °C for 10 h to obtain rare earth manganese-zirconium composite compound which is doped at surface and at grain boundary Ce_{0.14}La_{0.03}Nd_{0.04}Y_{0.05}Mn_{0.16}Zr_{0.58}O₂.

The rare earth manganese-zirconium composite compound obtained by adopting the preparation method in this example of the invention has the highest conversion rate of 70% for catalytic oxidation of NO, and the conversion temperature corresponding to the highest conversion rate is 280°C.

### Example 7

A mixed feed liquid with a concentration of 1.5 M was prepared according to the molar ratio of Ce/Nd/Hf/Zr in rare earth zirconium-manganese composite oxide, 3: 0.5: 0.5: 3; 2.6M NaOH solution was added into the mixed feed liquid at a uniform rate while stirring, the pH value in the precipitation process was 5-10, the pH value at the end was 10, and the temperature was controlled at 60°C; the precipitate was filtered, washed and dried, and the dried product was roasted at 800°C for 7 h to obtain rare earth zirconium-based oxide. The rare earth zirconium-based oxides were mixed with 4.9 M Mn(CH₃COO)₂ solution containing Ce, and the mixture was heat-treated at 210 °C for 7 h, and roasted at 750 °C for 9 h to obtain rare earth manganese-zirconium composite compound which is doped at surface and at grain boundary Ce_{0.4}Nd_{0.05}Hf_{0.05}Mn_{0.2}Zr_{0.5}O₂.

The rare earth manganese-zirconium composite compound obtained by adopting the preparation method in this example of the invention has the highest conversion rate of 64% for catalytic oxidation of NO, and the conversion temperature corresponding to the highest conversion rate is 292°C.

### Example 8

A mixed feed liquid with a concentration of 1.6 M was prepared according to the molar ratio of Ce/La/Nd/Y/Zr in rare earth zirconium-manganese composite oxide, 3: 0.2: 0.5: 0.3: 3; the mixed feed liquid was added to 2.8 M ammonium bicarbonate solution at a uniform rate while stirring, the pH value in the precipitation process was 8 ± 1, the pH value at the end was 9.4, and the temperature was controlled at 50°C ; the precipitate was filtered, washed and dried, and the dried product was roasted at 800°C for 7 h to obtain rare earth zirconium-based oxide. The rare earth zirconium-based oxide was mixed with 4.4M Mn(NO₃)₂ solution containing Ce, and the mixture was heat treated at 200°C for 9 h, and roasted at 750°C for 10 h to obtain rare earth manganese-zirconium composite compound which is doped at surface and at grain boundary Ce_{0.4}La_{0.02}Nd_{0.05}Y_{0.03}Mn_{0.2}Zr_{0.3}O₂.

The rare earth manganese-zirconium composite compound obtained by the preparation method in this example of the invention has the highest conversion rate of 62% for catalytic oxidation of NO, and the conversion temperature corresponding to the highest conversion rate is 299°C.

### Example 9

A mixed feed liquid with a concentration of 1.4 M was prepared according to the molar ratio of Ce/Sm/La/Nd/Y/Zr in rare earth zirconium-manganese composite oxide Ce_{0.2}Sm_{0.2}La_{0.02}Nd_{0.05}Y_{0.03}Mn_{0.3}Zr_{0.2}O_{1.9}, 1:1: 0.2: 0.5: 0.3: 2; the mixed feed solution and 2.6 M NaOH solution are added into a reactor at a uniform rate while stirring, the pH value in the precipitation process was 8.5 ± 0.5, the pH value at the end was 9, and the temperature was controlled at 50 °C ; the precipitate was filtered, washed and dried, and the dried product was calcined at 700 °C for 5 h to obtain rare earth zirconium-based oxide. The rare earth zirconium-based oxide was mixed with 5.1 M Mn(NO₃)₂ solution containing Ce and Sm, and the mixture was heat-treated at 300°C for 7 h, and roasted at 600°C for 9 h to obtain rare earth manganese-zirconium composite compound which is doped at surface and at grain boundary Ce_{0.2}Sm_{0.2}La_{0.02}Nd_{0.05}Y_{0.03}Mn_{0.3}Zr_{0.2}O_{1.9}.

The rare earth manganese-zirconium composite compound obtained by adopting the preparation method in this example of the invention has the highest conversion rate of 59% for catalytic oxidation of NO, and the conversion temperature corresponding to the highest conversion rate is 310°C.

### Example 10

A mixed feed liquid with a concentration of 1.5 M was prepared according to the molar ratio of Ce/Zr in rare earth zirconium-manganese composite oxide, 0.5: 7; the mixed feed liquid and 1.2 M ammonia solution were added into a reactor at a uniform rate while stirring, the pH value in the precipitation process was 7 ± 0.2, the pH value at the end was 9, and the temperature was controlled at 50°C; the precipitate was filtered, washed and dried, and the dried product was roasted at 600°C for 6 h to obtain rare earth zirconium-based oxide. The rare earth zirconium-based oxide was mixed with 3.8 M MnCh and FeCl₃ solution containing Ce, and the mixture was heat-treated at 150 °C for 6 h, and roasted at 500 °C for 10 h to obtain rare earth manganese-zirconium composite compound which is doped at surface and at grain boundary Ce_{0.1}Mn_{0.15}Fe_{0.05}Zr_{0.7}O₂.

The rare earth manganese-zirconium composite compound obtained by the preparation method in this example of the invention has the highest conversion rate of 65% for catalytic oxidation of NO, and the conversion temperature corresponding to the highest conversion rate is 283°C.

### Example 11

A mixed feed liquid with a concentration of 1.2 M was prepared according to the molar ratio of Ce/Zr in rare earth zirconium-manganese composite oxide Ce_{0.3}Mn_{0.1}Fe_{0.05}Co_{0.05}Zr_{0.5}O₂, 2:5; the mixed feed liquid was added into 2.1 M NaOH solution at a uniform rate while stirring, the pH in the precipitation process was 8-14, the pH value at the end was 9, and the temperature was controlled at 50°C; the precipitate was filtered, washed, and dried, and the dried product was roasted at 800°C for 7 h to obtain rare earth zirconium-based oxide. The rare earth zirconium-based oxide was mixed with 4.4 M Mn(CH₃COO)₂, Co(CH₃COO)₂, and Fe(CH₃COO)₂ solution containing Ce, and the mixture was heat treated at 200°C for 6 h, and roasted at 750°C for 8 h to obtain rare earth manganese-zirconium composite compound which is doped at surface and at grain boundary Ce_{0.3}Mn_{0.1}Fe_{0.05}Co_{0.05}Zr_{0.5}O₂.

The rare earth manganese-zirconium composite compound obtained by adopting the preparation method in this example of the invention has the highest conversion rate of 70% for catalytic oxidation of NO, and the conversion temperature corresponding to the highest conversion rate is 280°C.

### Example 12

A mixed feed liquid with a concentration of 1.4 M was prepared according to the molar ratio of Ce/Zr in rare earth zirconium-manganese composite oxide Ce_{0.3}Mn_{0.1}Cu_{0.05}Ti_{0.05}Zr_{0.5}O₂, 2:5; 1.8 M NaOH solution was added into the mixed feed liquid at a uniform rate while stirring, the pH value in the precipitation process was 8-11, the pH value at the end was 10, and the temperature was controlled at 55 °C; the precipitate was filtered, washed and dried, and the dried product was roasted at 600°C for 6 h to obtain rare earth zirconium-based oxide. The rare earth zirconium-based oxide was mixed with 5.2 M Mn(NO₃)₂, Cu(NO₃)₂, and Ti(NO₃)₄ solution containing Ce, and the mixture was heat treated at 150°C for 8 h, and roasted at 800°C for 5 h. After roasting, rare earth manganese oxide containing a spinel structure was formed on the surface and grain boundary of the rare earth zirconium-based oxide, and crystal boundary and surface-doped rare earth manganese-zirconium composite compound Ce_{0.3}Mn_{0.1}Cu_{0.05}Ti_{0.05}Zr_{0.5}O₂ was obtained.

The rare earth manganese-zirconium composite compound obtained by adopting the preparation method in this example of the invention has the highest conversion rate of 68% for catalytic oxidation of NO, and the conversion temperature corresponding to the highest conversion rate is 281°C.

### Example 13

A mixed feed liquid with a concentration of 1.4 M was prepared according to the molar ratio of Ce/La/Pr/Zr in rare earth zirconium-manganese composite oxide Ce_{0.2}La_{0.05}Pr_{0.05}Mn_{0.1}Fe_{0.1}Zr_{0.5}O₂, 1: 0.3: 0.5: 5; the mixed feed liquid and 2.8 M NaOH solution were added into a reactor at a uniform rate while stirring, the pH value in the precipitation process was controlled at 9 ± 0.2, the pH value at the end was 10.7, and the temperature was controlled at 40°C ; the precipitate was filtered, washed and dried, and the dried product was roasted at 800°C for 5 h to obtain rare earth zirconium-based oxide. The rare earth zirconium-based oxide was mixed with 4.5 M Mn(NO₃)₂ and Fe(NO₃)₃ solution containing Ce and La, and the mixture was heat-treated at 200°C for 10 h, and roasted at 600°C for 9 h to obtain rare earth manganese-zirconium composite compound which is doped at surface and at grain boundary Ce_{0.2}La_{0.05}Pr_{0.05}Mn_{0.1}Fe_{0.1}Zr_{0.5}O₂.

The rare earth manganese-zirconium composite compound obtained by adopting the preparation method in this example of the invention has the highest conversion rate of 70% for catalytic oxidation of NO, and the conversion temperature corresponding to the highest conversion rate is 278°C.

### Example 14

A mixed feed liquid with a concentration of 1.5 M was prepared according to the molar ratio of Ce/Nd/Zr in rare earth zirconium-manganese composite oxide Ce_{0.4}Nd_{0.05}Mn_{0.2}Fe_{0.1}Sn_{0.05}Zr_{0.2}O₂, 1: 0.5: 2; the mixed feed liquid was added into 3.4 M ammonium bicarbonate solution at a uniform rate while stirring, the pH value in the precipitation process was 9-10, the pH value at the end was 9, and the temperature was controlled at 40°C; the precipitate was filtered, washed and dried, and the dried product was roasted at 600°C for 4 h to obtain the rare earth zirconium-based oxide. The rare earth zirconium-based oxide was mixed with MnCl₂, FeCl₃ and SnCl₄ solution containing Ce, and the mixture was heat treated at 250°C for 5 h, and then roasted at 800°C for 7 h. After roasting, rare earth manganese oxide containing a mullite structure was formed on the surface and grain boundary of the rare earth zirconium-based oxide, and rare earth manganese-zirconium composite compound which is doped at surface and at grain boundary Ce_{0.4}Nd_{0.05}Mn_{0.2}Fe_{0.1}Sn_{0.05}Zr_{0.2}O₂ was obtained.

The rare earth manganese-zirconium composite compound obtained by adopting the preparation method in this example of the invention has the highest conversion rate of 72% for catalytic oxidation of NO, and the conversion temperature corresponding to the highest conversion rate is 268°C.

### Example 15

A mixed feed liquid with a concentration of 1.4 M was prepared according to the molar ratio of Ce/Sm/La/Nd/Y/Zr in rare earth zirconium-manganese composite oxide Ce_{0.2}Sm_{0.2}La_{0.02}Nd_{0.05}Y_{0.03}Mn_{0.1}Co_{0.1}Zr_{0.3}O₂, 1:1: 0.2: 0.5: 0.3: 3; the mixed feed liquid and 2.7 M NaOH solution were added into a reactor at a uniform rate while stirring, the pH value in the precipitation process was controlled at 8 ± 0.2, the pH value at the end was 9.4, and the temperature was controlled at 50 °C ; the precipitate was filtered, washed and dried, and the dried product was roasted at 800 °C for 4 h to obtain rare earth zirconium-based oxide. The rare earth zirconium-based oxide was mixed with 4.6 M Mn(NO₃)₂ and Co(NO₃)₂ solution containing Ce and Sm, and the mixture was heat-treated at 100°C for 11 h, and roasted at 600 °C for 9 h to obtain rare earth manganese-zirconium composite compound which is doped at surface and at grain boundary Ce_{0.2}Sm_{0.2}La_{0.02}Nd_{0.05}Y_{0.03}Mn_{0.3}Zr_{0.2}O_{1.9}.

The rare earth manganese-zirconium composite compound obtained by adopting the preparation method in this example of the invention has the highest conversion rate of 74% for catalytic oxidation of NO, and the conversion temperature corresponding to the highest conversion rate is 264°C.

### Example 16

A mixed feed liquid with a concentration of 1.2 M was prepared according to the molar ratio of Ce/Si/Zr in rare earth zirconium-manganese composite oxide Ce_{0.2}Si_{0.1}Mn_{0.15}W_{0.05}Zr_{0.5}O₂, 1:1:5; the mixed feed liquid was added into 2.2 M NaOH solution at a uniform rate while stirring, the pH value in the precipitation process was 9-14, the pH value at the end was 9, and the temperature was controlled at 30 °C ; the precipitate was filtered, washed and dried, and the dried product was roasted at 750 °C for 5 h to obtain rare earth zirconium-based oxide. The rare earth zirconium-based oxide was mixed with 4.4 M Mn(CH₃COO)₂ and tungsten hexacarbonyl solution containing Ce, and the mixture was heat-treated at 150°C for 7 h, and roasted at 800°C for 7 h to obtain rare earth manganese-zirconium composite compound which is doped at surface and at grain boundary Ce_{0.2}Si_{0.1}Mn_{0.15}W_{0.05}Zr_{0.5}O₂.

The rare earth manganese-zirconium composite compound obtained by adopting the preparation method in this example of the invention has the highest conversion rate of 76% for catalytic oxidation of NO, and the conversion temperature corresponding to the highest conversion rate is 246°C.

### Example 17

A mixed feed liquid with a concentration of 1.4 M was prepared according to the molar ratio of Ce/Nd/Y/Zr in rare earth zirconium-manganese composite oxide Ce_{0.1}Nd_{0.05}Y_{0.05}Mn_{0.15}Cu_{0.15}Zr_{0.5}O₂, 1:1:1:10; the mixed feed liquid was added into 1.9 M urea solution at a uniform rate while stirring, the pH value in the precipitation process was 8-10, the pH value at the end was 8, and the temperature was controlled at 100°C; the precipitate was filtered, washed and dried, and the dried product was roasted at 850°C for 4 h to obtain rare earth zirconium-based oxide. The rare earth zirconium-based oxide was mixed with 4.2 M Mn(NO₃)₂ and Cu(NO₃)₂ solution containing Ce, and the mixture was heat-treated at 200°C for 7 h, and roasted at 750°C for 6 h to obtain rare earth manganese-zirconium composite compound which is doped at surface and at grain boundary Ce_{0.2}Nd_{0.05}Hf_{0.05}Mn_{0.1}Nb_{0.1}Zr_{0.5}O₂.

The rare earth manganese-zirconium composite compound obtained by adopting the preparation method in this example of the invention has the highest conversion rate of 78% for catalytic oxidation of NO, and the conversion temperature corresponding to the highest conversion rate is 240°C. After high-temperature aging at 850°C for 15 h, the highest conversion rate of NO is 70%, and the corresponding conversion temperature is 250 °C.

### Example 18

A mixed feed liquid with a concentration of 1.5 M was prepared according to the molar ratio of Ce/Al/Zr in rare earth zirconium-manganese composite oxide Ce_{0.2}Al_{0.1}Mn_{0.05}Cr_{0.1}Zr_{0.55}O₂, 1:1: 5.5; the mixed feed liquid and 3.2 M NaOH solution were added into a reactor at a uniform rate while stirring, the pH value in the precipitation process was controlled at 9 ± 0.2, the pH value at the end was 9.5, and the temperature was controlled at 45 °C; the precipitate was filtered, washed and dried, and the dried product was roasted at 700°C for 6 h to obtain rare earth zirconium-based oxide. The rare earth zirconium-based oxide was mixed with 4.6 M Mn(NO₃)₂ and Cr(NO₃)₃ solution containing Ce, and the mixture was heat-treated at 200°C for 6 h, and roasted at 900°C for 3 h to obtain rare earth manganese-zirconium composite compound which is doped at surface and at grain boundary Ce_{0.2}Al_{0.1}Mn_{0.05}Cr_{0.1}Zr_{0.55}O₂.

The rare earth manganese-zirconium composite compound obtained by the preparation method in this example of the invention has the highest conversion rate of 74% for catalytic oxidation of NO, and the conversion temperature corresponding to the highest conversion rate is 249°C.

### Example 19

A mixed feed liquid with a concentration of 1.4 M was prepared according to the molar ratio of Ce/Al/Zr in rare earth zirconium-manganese composite oxide Ce_{0.1}Al_{0.1}Mn_{0.1}Zn_{0.1}Zr_{0.6}O₂, 0.5: 1:6; 2.6 M sodium hydroxide solution was added into the mixed feed liquid at a uniform rate while stirring, the pH value in the precipitation process was 5-9, the pH value at the end was 9, and the temperature was controlled at 40°C; the precipitate was filtered, washed and dried, and the dried product was roasted at 650°C for 8 h to obtain rare earth zirconium-based oxide. The rare earth zirconium-based oxide was mixed with 4.7 M MnCl₂ and ZnCh solution containing Ce, and the mixture was heat-treated at 150°C for 8 h, and then roasted at 800°C for 8 h to obtain rare earth manganese-zirconium composite compound which is doped at surface and at grain boundary Ce_{0.1}Al_{0.1}Mn_{0.1}Zn_{0.1}Zr_{0.6}O₂.

The rare earth manganese-zirconium composite compound obtained by adopting the preparation method in this example of the invention has the highest conversion rate of 72% for catalytic oxidation of NO, and the conversion temperature corresponding to the highest conversion rate is 267°C.

### Example 20

A mixed feed liquid with a concentration of 1.0 M was prepared according to the molar ratio of Ce/La/Y/Al/Zr in rare earth zirconium-manganese composite oxide Ce_{0.15}La_{0.05}Y_{0.05}Al_{0.05}Mn_{0.2}Zr_{0.5}O_{1.98}P_{0.01}, 2:1:1:1:10; the mixed solution was added into 3.2 M ammonia solution at a uniform rate while stirring, the pH value in the precipitation process was 8-10, the pH value at the end was 8, and the temperature was controlled at 40°C ; the precipitate was filtered, washed and dried, and the dried product was roasted at 800°C for 5 h to obtain rare earth zirconium-based oxide. The rare earth zirconium-based oxide was mixed with 4.7 M MnCh and H₃PO₄ solution containing Ce, and the mixture was heat-treated at 200°C for 7 h, and roasted at 750°C for 7 h to obtain rare earth manganese-zirconium composite compound which is doped at surface and at grain boundary Ce_{0.15}La_{0.05}Y_{0.05}Al_{0.05}Mn_{0.2}Zr_{0.5}O_{1.98}P_{0.01}.

The rare earth manganese-zirconium composite compound obtained by adopting the preparation method in this example of the invention has the highest conversion rate of 67% for catalytic oxidation of NO, and the conversion temperature corresponding to the highest conversion rate is 279°C.

### Example 21

A mixed feed liquid with a concentration of 1.2 M was prepared according to the molar ratio of Ce/Zr in rare earth zirconium-manganese composite oxide Ce_{0.15}Mn_{0.2}Ni_{0.15}Zr_{0.5}O₁.₉₈S_{0.02}, 0.2: 1; the mixed feed liquid and 2.6 M NaOH solution were added into a reactor at a uniform rate while stirring, the pH value in the precipitation process was 9 ± 0.2, the pH value at the end was 10.4, and the temperature was controlled at 40°C; the precipitate was filtered, washed and dried, and the dried product was roasted at 800°C for 6 h to obtain rare earth zirconium-based oxide. The rare earth zirconium-based oxide was mixed with 3.9 M MnCl₂, NiCl₂ and dilute sulfuric acid solution containing Ce, and the mixture was heat-treated at 200°C for 6 h, and roasted at 600°C for 10 h to obtain rare earth manganese-zirconium composite compound which is doped at surface and at grain boundary Ce_{0.15}Mn_{0.2}Ni_{0.15}Zr_{0.5}O_{1.98}S_{0.02}.

The rare earth manganese-zirconium composite compound obtained by adopting the preparation method in this example of the invention has the highest conversion rate of 72% for catalytic oxidation of NO, and the conversion temperature corresponding to the highest conversion rate is 268°C.

### Example 22

A mixed feed liquid of Ce³⁺ and Zr⁴⁺ with a concentration of 0.5 M was prepared according to the molar ratio of Ce/Zr in rare earth zirconium-manganese composite oxide Ce_{0.2}Mn_{0.2}Cu_{0.1}Zr_{0.5}O_{1.98}N_{0.01}, 1:5; the mixed feed liquid was added into 3.1 M ammonia solution at a uniform rate while stirring, the pH value in the precipitation process was 9-11, the pH value at the end was 9, and the temperature was controlled at 40°C; the precipitate was filtered, washed and dried, and the dried product was roasted at 600°C for 9 h to obtain rare earth zirconium-based oxide. The rare earth zirconium-based oxide was mixed with 4.2 M MnSO₄, CuSO₄ and pyridine nitrogen solution containing Ce, and the mixture was heat-treated at 150°C for 8 h, and roasted at 900°C for 9 h to obtain rare earth manganese-zirconium composite compound which is doped at surface and at grain boundary Ce_{0.2}Mn_{0.2}Cu_{0.1}Zr_{0.5}O_{1.98}N_{0.01}.

The rare earth manganese-zirconium composite compound obtained by adopting the preparation method in this example of the invention has the highest conversion rate of 64% for catalytic oxidation of NO, and the conversion temperature corresponding to the highest conversion rate is 295°C.

### Example 23

A mixed feed liquid with a concentration of 1.5 M was prepared according to the molar ratio of Ce/La/Nd/Y/Zr in rare earth zirconium-manganese composite oxide Ce_{0.14}La_{0.03}Nd_{0.04}Y_{0.05}Mn_{0.16}Zr_{0.58}O_{1.98}F_{0.04}, 6:2:4:3:58; the mixed feed liquid was added into 2.7 M NaOH solution at a uniform rate while stirring, the pH value in the precipitation process was 8-13, the pH value at the end was 8, and the temperature was controlled at 80°C ; the precipitate was filtered, washed and dried, and the dried product was roasted at 650°C for 7 h to obtain rare earth zirconium-based oxide. The rare earth zirconium-based oxide was mixed with 4.8 M Mn(NO₃)₂ solution containing Ce, La and Y and NH₄F solution, and the mixture was heat-treated at 200°C for 6 h, and roasted at 800°C for 11 h to obtain rare earth manganese-zirconium composite compound which is doped at surface and at grain boundary Ce_{0.14}La_{0.03}Nd_{0.04}Y_{0.05}Mn_{0.16}Zr_{0.58}O_{1.98}F_{0.04}.

The rare earth manganese-zirconium composite compound obtained by adopting the preparation method in this example of the invention has the highest conversion rate of 68% for catalytic oxidation of NO, and the conversion temperature corresponding to the highest conversion rate is 283°C.

### Example 24

A mixed feed liquid with a concentration of 1.5 M was prepared according to the molar ratio of Ce/La/Nd/Y/Zr in rare earth zirconium-manganese composite oxide Ce_{0.15}La_{0.04}Nd_{0.04}Y_{0.06}Mn_{0.16}Zr_{0.55}O₂, 10:3:4:6:55, by dissolving in water; the mixed feed liquid was added into 2.1 M ammonia solution at a uniform rate while stirring, the pH value in the precipitation process was 8-10, the pH value at the end was 10.1, and the temperature was controlled at 40°C ; the precipitate was filtered, washed and dried, and the dried product was roasted at 800°C for 6 h to obtain rare earth zirconium-based oxide. The rare earth zirconium-based oxide was mixed with 4.8 M MnCl₂ solution containing Ce and La, and the mixture was heat-treated at 200°C for 6 h, followed by washing, drying, heat treatment at 250°C for 5 h, and calcination at 800°C for 6 h. After roasting, rare earth manganese oxide containing a perovskite structure was formed on the surface and grain boundary of the rare earth zirconium-based oxide, and rare earth manganese-zirconium composite compound which is doped at surface and at grain boundary Ce_{0.15}La_{0.04}Nd_{0.04}Y_{0.06}Mn_{0.16}Zr_{0.55}O₂ was obtained.

The rare earth manganese-zirconium composite compound obtained by adopting the preparation method in this example of the invention has the highest conversion rate of 71% for catalytic oxidation of NO, and the conversion temperature corresponding to the highest conversion rate is 279°C.

### Example 25

A mixed feed liquid with a concentration of 1.5 M was prepared according to the molar ratio of Ce/Nd/Zr in rare earth zirconium-manganese composite oxide Ce_{0.15}Nd_{0.05}Mn_{0.05}V_{0.05}Sn_{0.05}Zr_{0.65}O₂, 2:1:13, by dissolving in water; 2.5 M ammonia solution was added into the mixed feed liquid at a uniform rate while stirring, the pH value in the precipitation process was 5-11, the pH value at the end was 11, and the temperature was controlled at 50°C ; the precipitate was filtered, washed, and dried, and the dried product was roasted at 700°Cfor 6 h to obtain rare earth zirconium-based oxide. The rare earth zirconium-based oxide was mixed with 4.8 M Mn(CH₃COO)₂, Sn(CH₃COO)₄, and VCl₃ solution containing Ce, the mixture was heat-treated at 180 °C for 15 h, and roasted at 500°C for 4 h, and the product after roasting was crushed and roasted at 800 °C for 4 h to obtain rare earth manganese zirconium composite compound Ce_{0.15}Nd_{0.05}Mn_{0.05}V_{0.05}Sn_{0.05}Zr_{0.65}O₂ with core-shell structure.

The rare earth manganese-zirconium composite compound with core-shell structure obtained by adopting the preparation method in this example of the invention has the highest conversion rate of 65% for catalytic oxidation of NO, and the conversion temperature corresponding to the highest conversion rate is 290°C.

### Example 26

A mixed feed liquid with a concentration of 1.5 M was prepared according to the molar ratio of Ce/Nd/Pr/Eu/Zr in rare earth zirconium-manganese composite oxide Ce_{0.15}Nd_{0.05}Pr_{0.05}Eu_{0.05}Mn_{0.2}Zr_{0.5}O_{1.98}S_{0.02}, 2:1:1:1:10; the mixed feed liquid and 2.2 M ammonium bicarbonate solution were added into a reactor at a uniform rate while stirring, the pH value in the precipitation process was controlled at 8 ± 0.2, the pH value at the end was 10, and the temperature was controlled at 44°C; the precipitate was filtered, washed and dried, and the dried product was roasted at 600 °C for 8 h to obtain rare earth zirconium-based oxide. The rare earth zirconium-based oxide was mixed with 4.5 M manganese sulfate solution containing Ce, and the mixture was heat-treated at 280°C for 7 h, and roasted at 650°C for 3 h, and the product after roasting was crushed and roasted at 700°Cfor 10 h to obtain rare earth manganese-zirconium composite compound which is doped at surface and at grain boundary Ce_{0.15}Nd_{0.05}Pr_{0.05}Eu_{0.05}Mn_{0.2}Zr_{0.5}O_{1.98}S_{0.02}.

The rare earth manganese-zirconium composite compound obtained by adopting the preparation method in this example of the invention has the highest conversion rate of 64% for catalytic oxidation of NO, and the conversion temperature corresponding to the highest conversion rate is 291°C.

### Example 27

A mixed feed liquid with a concentration of 1.5 M was prepared according to the molar ratio of Ce/Sc/Yb/Y/Zr in rare earth zirconium-manganese composite oxide Ce_{0.4}Sc_{0.02}Yb_{0.05}Y_{0.03}Mn_{0.1}Ti_{0.1}Zr_{0.3}O_{1.98}S_{0.02}, 25:2:5:3:30; the mixed feed liquid and 2.2 M ammonia solution were added into a reactor at a uniform rate while stirring, the pH value in the precipitation process was controlled at 9.5 ± 0.2, the pH value at the end was 10, and the temperature was controlled at 40 °C ; the precipitate was filtered, washed and dried, and the dried product was roasted at 550°C for 10 h to obtain rare earth zirconium-based oxide. The rare earth zirconium-based oxide was mixed with 4.4 M manganese sulfate and titanyl sulfate solution containing Ce, the mixture was heat-treated at 180°C for 8 h, and roasted at 450 °C for 10 h, and the product after roasting was crushed and roasted at 650 °C for 10 h to obtain rare earth manganese-zirconium composite compound which is doped at surface and at grain boundary Ce_{0.4}Sc_{0.02}Yb_{0.05}Y_{0.03}Mn_{0.1}Ti_{0.1}Zr_{0.3}O_{1.98}S_{0.02}.

The rare earth manganese-zirconium composite compound obtained by adopting the preparation method in this example of the invention has the highest conversion rate of 67% for catalytic oxidation of NO, and the conversion temperature corresponding to the highest conversion rate is 280°C.

### Example 28

A mixed feed liquid with a concentration of 1.5 M was prepared according to the molar ratio of Ce/Nd/Tm/Zr in rare earth zirconium-manganese composite oxide Ce_{0.2}Nd_{0.05}Tm_{0.05}Mn_{0.1}Zn_{0.1}Zr_{0.5}O₂, 3:1:1:10, by dissolving in water; the mixed feed liquid was added into 2.1 M ammonia water at a uniform rate while stirring, the pH value in the precipitation process was 8-11, the pH value at the end was 10.5, and the temperature was controlled at 55 °C; the precipitate was filtered, washed and dried, and the dried product was roasted at 800°C for 2 h to obtain rare earth zirconium-based oxide. The rare earth zirconium-based oxide was mixed with 4.6M Mn(NO₃)₂, Zn(NO₃)₂ solution containing Ce, and the mixture was heat-treated at 280°C for 6 h, and roasted at 850°C for 11 h to obtain rare earth manganese-zirconium composite compound which is doped at surface and at grain boundary Ce_{0.2}Nd_{0.05}Tm_{0.05}Mn_{0.1}Zn_{0.1}Zr_{0.5}O₂.

The rare earth manganese-zirconium composite compound obtained by adopting the preparation method in this example of the invention has the highest conversion rate of 63% for catalytic oxidation of NO, and the conversion temperature corresponding to the highest conversion rate is 290°C.

### Example 29

A mixed feed liquid with a concentration of 1.5 M was prepared according to the molar ratio of Ce/La/Gd/Ho/Zr in rare earth zirconium-manganese composite oxide Ce_{0.14}La_{0.03}Gd_{0.04}Ho_{0.05}Mn_{0.15}Cr_{0.5}Zr_{0.58}O₂, 10:2:4:5:58, by dissolving in water; the mixed feed liquid was added into 2.1 M ammonium bicarbonate solution at a uniform rate while stirring, the pH value in the precipitation process was 9-11, the pH value at the end was 9, and the temperature was controlled at 60°C; the precipitate was filtered, washed and dried, and the dried product was roasted at 800 °C for 4 h to obtain rare earth zirconium-based oxide. The rare earth zirconium-based oxide was mixed with 4.7 M Mn(NO₃)₂ solution containing Ce and La, and the mixture was heat-treated at 150 °C for 10 h, and roasted at 680 °C for 12 h to obtain rare earth manganese-zirconium composite compound which is doped at surface and at grain boundary Ce_{0.14}La_{0.03}Gd_{0.04}Ho_{0.05}Mn_{0.15}Cr_{0.5}Zr_{0.58}O₂.

The rare earth manganese-zirconium composite compound obtained by adopting the preparation method in this example of the invention has the highest conversion rate of 63% for catalytic oxidation of NO, and the conversion temperature corresponding to the highest conversion rate is 291°C.

### Example 30

A mixed feed liquid with a concentration of 1.5 M was prepared according to the molar ratio of Ce/Eu/Al/Si/Zr in rare earth zirconium-manganese composite oxide Ce_{0.14}Eu_{0.03}Al_{0.04}Si_{0.05}Mn_{0.16}Zr_{0.5}sO_{1.98}N_{0.02}, 12:2:4:5:58; the mixed feed liquid was added into 2.1 M NaOH solution at a uniform rate while stirring, the pH value in the precipitation process was 8-11, the pH value at the end was 8, and the temperature was controlled at 90°C; the precipitate was filtered, washed and dried, and the dried product was roasted at 760°C for 8 h to obtain rare earth zirconium-based oxide. The rare earth zirconium-based oxide was mixed with 4.2 M Mn(NO₃)₂ solution containing Ce and Eu, and the mixture was heat-treated at 200°C for 7 h, and roasted at 500°C for 13 h to obtain rare earth manganese-zirconium composite compound which is doped at surface and at grain boundary Ce_{0.14}Eu_{0.03}Al_{0.04}Si_{0.05}Mn_{0.16}Zr_{0.58}O₂.

The rare earth manganese-zirconium composite compound obtained by adopting the preparation method in this example of the invention has the highest conversion rate of 60% for catalytic oxidation of NO, and the conversion temperature corresponding to the highest conversion rate is 292°C.

### Example 31

A mixed feed liquid with a concentration of 1.4 M was prepared according to the molar ratio of Ce/La/Zr in rare earth zirconium-manganese composite oxide Ce_{0.3}La_{0.05}Mn_{0.1}Fe₀.₀₅Zr_{0.5}O₂, 1: 0.5: 5; 1.8 M sodium hydroxide solution was added into the mixed feed liquid at a uniform rate while stirring, a certain amount of cerium nitrate solution was continuously added in the precipitation process, and then the precipitation was continued, so that all cations were completely precipitated, the pH value in the precipitation process was 8-11, the pH value at the end was 10, and the temperature was controlled at 55 °C; the precipitate was filtered, washed and dried, and the dried product was roasted at 700 °C for 6 h to obtain rare earth zirconium-based oxide with gradient distribution of elements. The rare earth zirconium-based oxide was mixed with 5.2 M Mn(NO₃)₂ and Fe(NO₃)₂ solution containing Ce, and the mixture was heat-treated at 150°C for 8 h, and roasted at 700°C for 5 h to obtain rare earth manganese-zirconium composite compound which is doped at surface and at grain boundary Ce_{0.3}Mn_{0.1}Cu_{0.05}Ti_{0.05}Zr_{0.5}O₂.

The rare earth manganese-zirconium composite compound obtained by adopting the preparation method in this example of the invention has the highest conversion rate of 73% for catalytic oxidation of NO, and the conversion temperature corresponding to the highest conversion rate is 277°C.

### Example 32

A mixed solution with a concentration of 1.3 M was prepared according to the molar ratio of Ce/Nd/Eu/Zr in rare earth zirconium-manganese composite oxide Ce_{0.15}Nd_{0.05}Eu_{0.05}Mg_{0.15}Mn_{0.2}Zr_{0.4}O₂, 2:1:1:10, by dissolving in water; the mixed solution and the 2.5 M magnesium bicarbonate solution were added into a reactor at a uniform while stirring, the pH value in the precipitation process was controlled at 7.5 ± 0.2, the pH value at the end was 9, and the temperature was controlled at 55 °C; the precipitate was filtered, washed and dried, and the dried product was roasted at 800°C for 8 h to obtain rare earth zirconium-based oxide. The rare earth zirconium-based oxide was mixed with 4 M Mn(NO₃)₃ solution containing Ce, the mixture was heat-treated at 200°C for 5 h, heat-treated at 250°C for 8 h, roasted at 500°C for 4 h, and roasted at 750 °C for 8 h, and the product after roasting was crushed to obtain rare earth manganese zirconium compound Ce_{0.15}Nd_{0.05}Eu_{0.05}Mg_{0.15}Mn_{0.2}Zr_{0.4}O₂ with a core-shell structure.

The rare earth manganese-zirconium composite compound with core-shell structure obtained by the preparation method in this example of the invention has the highest conversion rate of 70% for catalytic oxidation of NO, and the conversion temperature corresponding to the highest conversion rate is 286 °C.

### Example 33

A mixed solution with a concentration of 1.1 M was prepared according to the molar ratio of Ce/Ga/Ca/Zr nitrate in rare earth zirconium-manganese composite oxide Ce_{0.2}Sm_{0.2}La_{0.02}Ga_{0.05}Ca_{0.03}Mn_{0.1}Co_{0.1}Zr_{0.3}O_{1.98}S_{0.02}, 10:5:3:30, by dissolving in water; the mixed solution and 2.5 M sodium hydroxide solution were added into a reactor at a uniform rate while stirring, the pH value in the precipitation process was controlled at 8 ± 0.2, the pH value at the end was 13, and the temperature was controlled at 55 °C; then the required Sm(NO₃)₃,La(NO₃)₃ solution and sodium hydroxide solution were added for the second-step precipitation reaction, the pH value in the precipitation end was 10, the precipitate was subjected to post-treatment such as filtering, washing and the like,

the dried product was roasted at 700 °C for 11 h to obtain rare earth zirconium-based oxide with gradient distribution. The rare earth zirconium-based oxide was mixed with 4 M Mn(NO₃)₃ solution containing Ce, the mixture was heat-treated at 300°C for 6 h, and roasted at 800 °C for 10 h, and the product after roasting was crushed to obtain rare earth manganese zirconium compound Ce_{0.2}Sm_{0.2}La_{0.02}Ga_{0.05}Ca_{0.03}Mn_{0.1}Co_{0.1}Zr_{0.3}O_{1.98}S_{0.02} with a core-shell structure.

The rare earth manganese-zirconium composite compound with gradient distribution obtained by adopting the preparation method in this example of the invention has the highest conversion rate of 71% for catalytic oxidation of NO, and the conversion temperature corresponding to the highest conversion rate is 284°C.

### Example 34

A mixed feed liquid with a concentration of 1.3 M was prepared according to the molar ratio of Ce: La: Y: Zr chloride in rare earth zirconium-manganese composite oxide Ce_{0.2}La_{0.05}Y_{0.05}Mn_{0.2}Zr_{0.5}O₂, 2:1:1:10, by dissolving in water; the mixed feed liquid was mixed with 2.5 mol/L sodium hydroxide solution for precipitation reaction, the precipitation temperature was 60°C , the pH value in the precipitation process was controlled at 5-11, the pH value was adjusted twice for step-by-step precipitation, the pH value was firstly adjusted to 5 for zirconium ion precipitation, then the pH value was slowly adjusted to 11 for cerium ion and yttrium ion precipitation, the pH value at the end of precipitation was 11, the precipitate was filtered, washed and dried, and the dried product was roasted at 750°C for 8 h to obtain rare earth zirconium-based oxide with gradient distribution. The rare earth zirconium-based oxide was mixed with 4 M Mn(NO₃)₃ solution containing Ce, the mixture was heat-treated at 200°C for 9 h, roasted at 500°C for 4 h, and roasted at 800 °C for 6 h, and the product after roasting was crushed to obtain rare earth manganese-zirconium composite compound Ce_{0.2}La_{0.05}Y_{0.05}Mn_{0.2}Zr_{0.5}O₂ with gradient distribution and a core-shell structure.

The rare earth manganese-zirconium composite compound with gradient distribution and core-shell structure obtained by adopting the preparation method in this example of the invention has the highest conversion rate of 68% for catalytic oxidation of NO, and the conversion temperature corresponding to the highest conversion rate is 288°C. After high-temperature aging at 900 °C for 15 h, the highest conversion rate of NO is 60%, and the corresponding conversion temperature is 292 °C.

### Example 35

A mixed feed liquid with a concentration of 1.3 M was prepared according to the molar ratio of Ce: Zr nitrate in rare earth zirconium-manganese composite oxide Ce_{0.25}La_{0.05}Mn_{0.35}Nd_{0.05}Zr_{0.3}O_{1.98}, 1:2, by dissolving in water; the mixed feed liquid was mixed with 2.5 mol/L ammonia solution for precipitation reaction, the precipitation temperature was 80 °C, the pH value in the precipitation process was controlled at 9-11, two-step precipitation was carried out, the pH value was firstly adjusted to 5 for zirconium ion precipitation, after aging for 1 h, the pH value was slowly adjusted to 11 for cerium ion precipitation, the pH value at the end of precipitation was 11, the precipitate was filtered, washed and dried, and the dried product was roasted at 600°C for 10 h to obtain rare earth zirconium-based oxide with a core-shell structure. The rare earth zirconium-based oxide was mixed with 3.6 M Mn(NO₃)₃ solution containing Ce, the mixture was heat-treated at 170°C for 12 h, roasted at 550°C for 2 h, and roasted at 600°C for 10 h, and the product after roasting was crushed to obtain rare earth manganese zirconium compound Ce_{0.25}La_{0.05}Mn_{0.35}Nd_{0.05}Zr_{0.3}O_{1.98} with a core-shell structure.

The rare earth manganese-zirconium composite compound with gradient distribution and core-shell structure obtained by adopting the preparation method in this example of the invention has the highest conversion rate of 73% for catalytic oxidation of NO, and the conversion temperature corresponding to the highest conversion rate is 265°C.

From the data of Comparative Examples and Examples, it can be seen that compared with the products prepared by the preparation method provided in Comparative Examples, with NO conversion rate of lower than 50% and conversion temperature at 350 °C , the highest NO conversion rate of the rare earth manganese-zirconium composite compound obtained by the preparation method of each example of the invention is 78%, the conversion temperature corresponding to the highest conversion rate is 240°C, the NO conversion rate is obviously improved, the corresponding conversion temperature is obviously reduced, and obvious beneficial technical effects are achieved.

In conclusion, the invention relates to a rare earth manganese-zirconium composite compound which is doped at surface and at grain boundary and a preparation method and use thereof, wherein rare earth manganese oxide with a special structure is formed at the grain boundary and surface of rare earth zirconium-based oxide by a grain boundary doping method to obtain the rare earth manganese-zirconium composite compound. The oxygen defects at the grain boundary and surface are increased, so that the amount of active oxygen is increased, catalytic activity of the rare earth manganese-zirconium composite compound is improved, its high-temperature sintering is inhibited, and its capability for catalytic oxidation of NO is improved. The rare earth manganese-zirconium composite compound can be applied to a catalyst, which can greatly reduce the consumption of noble metal.

It is to be understood that the above-described embodiments of the invention are merely exemplary or explanatory of the principles of the invention and are not to be construed in a limiting sense. Accordingly, any modifications, equivalents, improvements, and the like that may be made without departing from the spirit and scope of the invention are intended to be included within the scope of the invention. Furthermore, the appended claims are intended to cover all changes and modifications that fall within the metes and bounds of the appended claims, or equivalents of such metes and bounds.

## Claims

1. A rare earth manganese-zirconium composite compound which is doped at surface and at grain boundary, wherein the rare earth manganese-zirconium composite compound has a chemical formula of REaMnbZrcLdMeO(2-δ)Dβ, RE is a rare earth element, M and L are cation doping elements, and D is an anion doping element;
wherein 0.1≤a≤0.5, 0.05≤b≤0.4, 0.2≤c≤0.8, 0≤d≤0.2, 0≤e≤0.2, 0≤δ≤0.1, 0≤β≤0.1, a+b+c+d+e=1.

2. The rare earth manganese-zirconium composite compound which is doped at surface and at grain boundary according to claim 1, wherein the grain boundary and the surface of the rare earth manganese-zirconium composite compound contain one or more of doping elements M, L and D.

3. The rare earth manganese-zirconium composite compound which is doped at surface and at grain boundary according to claim 1 or 2, wherein the doping elements M, L and D at the grain boundary and surface of the rare earth manganese-zirconium composite oxide are in the form of one or more selected from oxides, nitrogen-containing compounds, fluorides, phosphates and sulfates.

4. The rare earth manganese-zirconium composite compound which is doped at surface and at grain boundary according to any one of claims 1-3, wherein the RE comprises one or a combination of more than one selected from La, Ce, Pr, Nd, Sm, Eu, Gd, Tb, Dy, Ho, Er, Tm, Yb, Lu, Y and Sc;
preferably, RE is one or a combination of more than one selected from La, Ce, Pr, Nd, Sm, Eu, Gd and Y.

5. The rare earth manganese-zirconium composite compound which is doped at surface and at grain boundary according to any one of claims 1-4, wherein the cation doping element M comprises a transition metal, preferably one or a combination of more than one selected from Fe, Co, Ni, Cu, Zn, V, Ti, Cr, Mo, W, Hf and Nb; the cation doping element L comprises alkaline earth metal and one or a combination of more than one selected from Ga, Al, Si and Sn, and the alkaline earth metal is preferably one or a combination of more than one selected from Ba, Sr, Mg and Ca; and the doping element D comprises one or a combination of more than one selected from anions N, P, F and S.

6. The rare earth manganese-zirconium composite compound which is doped at surface and at grain boundary according to any one of claims 1-5, wherein the total amount of +3 and +4 valence states of Mn at the surface and grain boundary of the rare earth manganese-zirconium composite compound accounts for more than 80% of all valence states of Mn; preferably, greater than 90%.

7. The rare earth manganese-zirconium composite compound which is doped at surface and at grain boundary according to any one of claims 1-6, wherein the rare earth manganese-zirconium composite compound comprises a core-shell structure, the core comprises rare earth and zirconium elements, and the shell comprises rare earth and manganese elements.

8. The rare earth manganese-zirconium composite compound which is doped at surface and at grain boundary according to any one of claims 1-6, wherein the rare earth manganese-zirconium composite compound comprises rare earth zirconium-based oxide with gradient distribution of elements.

9. A preparation method of the rare earth manganese-zirconium composite compound which is doped at surface and at grain boundary according to any one of claims 1-8, comprising the following steps:
S1, mixing a mixed salt aqueous solution of Zr and RE or a mixed salt aqueous solution of Zr, RE, L and D with an alkaline solution in a required stoichiometric ratio, carrying out precipitation reaction, and filtering, washing, drying and roasting to obtain rare earth zirconium-based oxide containing RE and L;
S2, mixing a mixed salt aqueous solution of Mn and RE or a mixed salt aqueous solution of Mn, RE, M and D in the required stoichiometric ratio with the rare earth zirconium-based oxide obtained in step S1 to obtain a composite compound wet material;
S3, performing one or two heat treatments on the composite compound wet material obtained in step S2; and
S4, performing one or two calcinations on the material obtained in step S3 to obtain the rare earth manganese-zirconium composite compound which is doped at surface and at grain boundary.

10. The method according to claim 9, wherein the doping element D is added in one or both of steps S1 and S2; the doping element D is added in the form of one or a combination of more than one selected from nitrate, fluoride, phosphate and sulfate, preferably one or a combination of more than one selected from nitrate and sulfate.

11. The method according to claim 9, wherein the manganese source in the mixed salt aqueous solution in step S1 and step S2 comprises one or a combination of more than one selected from chloride, nitrate, sulfate and acetate, preferably manganese nitrate; the zirconium source comprises one or a combination of more than one selected from oxychloride, nitrate, sulfate, acetate and citrate, preferably zirconyl nitrate; the salt aqueous solution of M, L, and RE comprises one or a combination of more than one selected from liquid salt of chloride, nitrate, sulfate, acetate, citrate, and amino acid salt, and organosilicon compound, preferably nitrate.

12. The method according to claim 9, wherein the alkaline solution comprises at least one selected from magnesium bicarbonate, urea and hydroxide, carbonate or bicarbonate containing at least one element selected from ammonium, sodium and potassium, preferably at least one selected from sodium hydroxide, urea, ammonia water and ammonium bicarbonate.

13. The method according to claim 9, wherein pH value in the precipitation process of step S1 is controlled at 4.5-14, preferably 5-11; pH value at the end of precipitation is controlled at 8-13, preferably 9-11; and temperature during the precipitation is 0-120°C, preferably 20-80°C

14. The method according to claim 9, wherein the roasting of the rare earth zirconium-based oxide is performed at a temperature of 500-1000°C for 1-20 h; preferably, the roasting is performed at a temperature of 600-900 °C for 2-10 h.

15. The method according to claim 9, wherein the heat treatment is performed at a temperature of 100-500°C for 2-30 h; preferably, the heat treatment is performed at a temperature of 150-300°C for 6-12 h.

16. The method according to claim 9, wherein the calcination is performed at a temperature of 400-1000°C for 1-20 h; preferably, the calcination is performed at a temperature of 500-900°C for 3-10 h.

17. The method according to claim 9, wherein the rare earth manganese-zirconium composite compound after post-treatment has a particle size D50 of less than 15 um, preferably less than 10 um.

18. The method according to claim 9, wherein the rare earth manganese oxide with perovskite, spinel or mullite structure is formed on the surface and grain boundary of the rare earth zirconium-based oxide after calcination.

19. Use of the rare earth manganese-zirconium composite compound which is doped at surface and at grain boundary according to any one of claims 1-8 in the fields of motor vehicle exhaust purification, industrial waste gas treatment and catalytic combustion.
